# EUROPEAN PATENT SPECIFICATION

(11) **EP 2 671 479 B1**
(45) Date of publication and mention of the grant of the patent: **06.04.2016**
(21) Application number: 13004169.2
(22) Date of filing: 04.06.2008
(51) Int. Cl.: A47J 31/36

(54) **A coffee machine**
Kaffeemaschine
Machine à café

(30) Priority: 05.06.2007 TR 200703866
(43) Date of publication of application: 11.12.2013
(62) Divisional of application: 08760475.7
(73) Proprietor: Arçelik Anonim Sirketi, 34950 Istanbul (TR)
(72) Inventor: Caglar, Talip, 34950 Istanbul (TR); Fesligil, Onder, 34950 Istanbul (TR)

(56) References cited:
- WO-A2-2004/069013
- ANONYMOUS: 'COMPUTERISED TASSEOGRAPHY' HALF BAKERY 31 March 2003, XP055227397

## Description

The present invention relates to a coffee machine that can read fortunes by reading and interpreting the figures formed by the coffee grounds left in the coffee cups.

The automatic coffee machines that prepare Turkish coffee in accordance with its traditional flavor are explained in the International Patent Applications No WO2004069013, WO2005122687, WO2005122850, WO2005122852, WO2006000961, WO2006000962 and WO2006008583. Turkish coffee is poured in coffee cups for serving after it is prepared. Turkish coffee, after the preparation, is poured into a coffee cup and the cup is placed on a saucer to be served. In Turkish coffee the coffee particles do not completely dissolve in the water and after boiling settle down in the liquid to form the coffee grounds. There is a tradition of reading fortunes in coffee grounds after drinking coffee in places where Turkish coffee is served. In order to read fortunes in coffee grounds, the coffee cup with the settled down coffee grounds is turned upside down and placed on the saucer, and the coffee grounds trickle down towards the saucer by leaving marks on the inner surface of the coffee cup. After waiting for a while for the cup to cool down, it is taken off the saucer and fortune is read by looking at and interpreting the marks of the dried coffee grounds on the inner surface of the cup and the saucer. The user demands that the present machines that prepare Turkish coffee, besides making coffee, should also have the ability of reading fortunes in coffee grounds after drinking coffee.

The aim of the present invention is the realization of a coffee machine that can read fortunes in coffee grounds of a user who drinks Turkish coffee.

The coffee machine realized in order to attain the aim of the present invention is explicated in the claims.

The coffee machine of the present invention is used to make Turkish coffee in accordance with the appropriate taste and consistency and comprises a coffee grounds fortune teller device. The coffee grounds fortune teller device reads and interprets the coffee grounds settled on the coffee cup and saucer wherein coffee is put and thus reads the fortune of the user in the coffee grounds.

The cup for drinking Turkish coffee is turned upside down on the saucer after drinking coffee and placed in the chamber in the coffee machine. When the containers are detected to be cooled sufficiently by the temperature sensor, the user is warned by an alarm upon deciding that the coffee grounds in the containers are dry and ready for fortune telling.

The user removes the cup and saucer from the chamber and this time places in the chamber separately and the coffee grounds on the cup and saucer are read and interpreted by the coffee grounds fortune teller device.

A camera is included in the coffee grounds fortune teller device that scans the inner surface of the cup or the saucer for taking images of the coffee ground marks, the cup, saucer or the camera are moved by means of a movement mechanism, for example by rotating 360 degrees, so that the entire inner surface of the cup and saucer is scanned by the camera.

The coffee grounds fortune teller device furthermore comprises a memory wherein the symbols, each having a different meaning and a significance level are stored, to which the figures formed by the coffee grounds recorded with the camera will be compared, a control unit that interprets by comparing the figures scanned by the camera with the symbols stored in the memory and prepares a scenario to be presented to the user and a telling means for transmitting the scenario prepared by the control unit to the user.

During the scanning of the camera, the figures under a specific size are left out the scope of evaluation by the control unit. By this elimination, very small coffee grounds marks are not included in the evaluation thus preventing the increase in the processing load by the parasitic images.

The coffee machine realized in order to attain the aim of the present invention is illustrated in the attached figures, where:

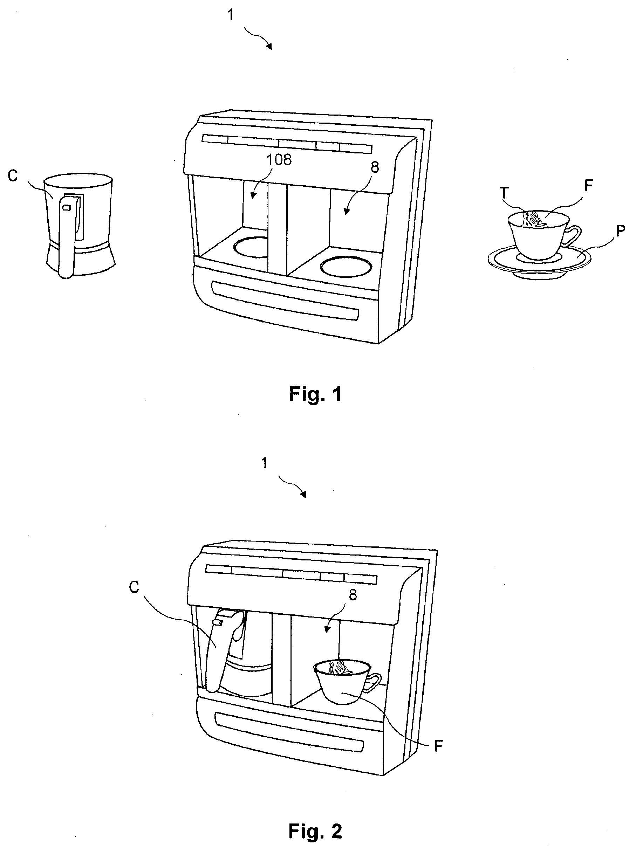

Figure 1 - is the perspective view of a coffee machine, a coffee pot, a cup and a saucer.
Figure 2 - is the perspective view of a coffee machine wherein a coffee pot and a cup are placed in the chambers thereof.

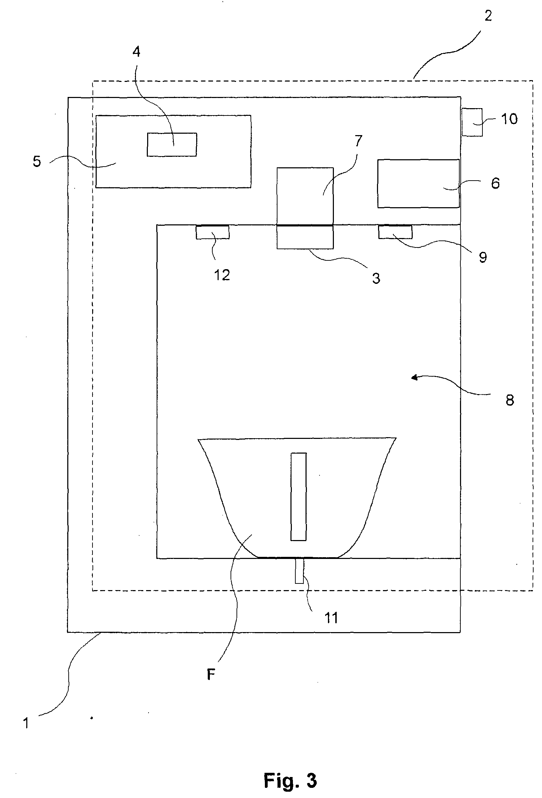

Figure 3 - is the schematic view of a coffee grounds fortune teller device

The elements illustrated in the figures are numbered as follows:
1- Coffee machine
2- Coffee grounds fortune teller device
3- Camera
4- Memory
5- Control unit
6- Telling means
7- Movement mechanism
8- 108 - Chamber
9- Temperature sensor
10- Alarm
11- Indicator
12- Light source

The coffee machine (1) of the present invention used in preparing Turkish coffee comprises a coffee grounds fortune teller device (2) that maintains the containers like the coffee cup (F) wherein coffee is put and the saucer (P) placed on the coffee cup (F) to be positioned appropriately for reading fortunes after drinking coffee, reading and interpreting the coffee grounds (T) marks settled and dried on the coffee cup (F) and saucer (P) that form certain figures and presents these interpretations to the user.

The coffee grounds fortune teller device (2) of the present invention comprises a camera (3) that scans the inner surface of the cup (F) or the saucer (P) for taking images of the coffee ground marks (T), a memory (4) wherein the symbols, each having a different meaning and a significance level to which the figures formed by the coffee grounds (T) detected with the camera (3) will be compared and the interpretations of these symbols are recorded, a control unit (5) that matches the figures scanned by the camera (3) with the symbols stored in the memory (4) and prepares a scenario to be presented to the user by incorporating the interpretations of these symbols with a software like fuzzy logic maintaining content integrity and a telling means (6) such as an Lcd screen, loud speaker or printer for transmitting the scenario prepared by the control unit (5) to the user in picture, audio or print out format.

The coffee grounds fortune teller device (2) furthermore comprises a movement mechanism (7) that moves, e.g. rotates, the cup (F), saucer (P) or the camera (3) during the scanning process of the camera (3), a chamber (8) wherein the cup (F), and/or the saucer (P) having coffee grounds (T) thereon are placed for reading - interpreting the coffee grounds (T) marks, a temperature sensor (9) that detects the temperature of the cup (F) and the saucer (P), an alarm (10) that warns the user visually and/or aurally at the start and end of the coffee ground (T) interpretation algorithm, an indicator (11) for placing the cup (F) or the saucer (P) in the proper position in the chamber (8) and a light source (12) for illuminating the inner surface of the cup (F) or the saucer (P).

The process of coffee grounds fortune telling is comprised of the following steps:
- After drinking Turkish coffee, the cup (F) with coffee grounds (T) settled on the base is turned upside down on the saucer (P).
- The cup (F) and/or the saucer (P) is placed in the chamber (8).
- The temperature of the cup (F) and/or the saucer (P) is detected by the temperature sensor (9).
- When the cup (F) and/or the saucer (P) is sufficiently cooled, the user is warned by the alarm (10) by deciding that the coffee grounds (T) is dry and ready to be read.
- The cup (F) and/or the saucer (P) is removed from the chamber (8) and the cup (F) is placed into the chamber (8) with the open side facing upwards.
- The coffee grounds (T) marks are scanned by the camera (3).
- The coffee grounds (T) marks are analyzed and interpreted by the memory (4) and the control unit (5).
- When the process of reading and interpreting the cup (F) is over, the user is warned by the alarm (10).
- The cup (F) is removed from the chamber (8) and the saucer (P) is placed into the chamber (8).
- The processes of reading and interpreting the coffee grounds (T) marks are repeated for the saucer (P).
- The user is given a fortune telling output by the telling means (6).

In the embodiment of the present invention, the coffee grounds (T) marks detected by scanning with the camera (3) are analyzed by the control unit (5) in two categories as the big figures (main lines) and small figures.

The big figures (main lines) are formed by the dark colored areas covered by the coffee grounds (T) and the light colored areas wherein the coffee grounds (T) don't exist. In the memory (4) the data determining the main lines like the proportion of the dark and light colored areas to each other and the changes from the dark colored areas to light colored areas are recorded. The big figures detected by the camera (3) are compared by the control unit (5) with the information in the memory (4) wherein the interpretation relating to big figures are stored. The big figures signify great changes in interpretation and the main framework of the scenario to be formed by the control unit (5) is derived as a result of the big figures analysis.

The small figures detected by the camera (3) are compared by the control unit (5) with the symbols stored in the memory (4), e.g. key, hand, mountain, path or moon, with each one having a different meaning and a degree of importance and after resemblance is established with the small figure caught by the camera (3) and the symbol in the memory (4), the small figure is assigned the meaning of the symbol it resembles.

The small figures, matched with the symbols by the control unit (5), are described as the cause-result of the interpreted big figures and are incorporated in the scenario determined by the big figures thereby an integrated scenario is formed by assembling the interpretations of the big figures and the small figures.

In the embodiment of the present invention, the inner surfaces of the cup (F) and the saucer (P) are scanned all around (360 degrees) by the camera (3) with the help of the movement mechanism (7). The scanning processes by the camera (3) are performed by assuming that the inner surfaces of the cup (F) and the saucer (P) are made up of segments smaller than 360 degrees (for example, as 10[deg.] x 36 segments, 30[deg.] x 12 segments or 60[deg.] x 6 segments). The segments smaller than 360 degrees are first evaluated separately then together by the control unit (5). For example, in the first scan, segments of 10 degrees are scanned consecutively for recording the figures and the 360 degree turn is completed. Afterwards, in similar fashion, scanning is performed by separating into segments of 30 and 60 degrees and the 360 degree turn is repeated for each one. Consequently, analyzing figures of different sizes by clarifying provides to increase the chance of recognizing the figures in the latter scans if not recognized in the former scan and to establish the relations of the figures with one another.

The positions of the figures on the cup (F) and the saucer (P) formed by the coffee grounds (T) affects the scenario. The positions of the figures detected by the camera (3) are defined by polar coordinates (r, θ) and the position data are used in the scenario formed by the control unit (5).

During the scan of the camera (3), the figures below a certain size are not included in the evaluation made by the control unit (5). By means of this elimination, the very small coffee grounds (T) marks are left outside the scope of evaluation thereby preventing the increase the process load by the parasitic images.

In the coffee machine (1) of the present invention, coffee can be made by placing a boiling container (C: coffee pot) inside the chamber (8).

In another embodiment of the present invention, in the coffee machine (1) a chamber (108) is provided only for performing coffee boiling process besides the chamber (8) wherein interpretation of the coffee grounds (T) is made. For example, the coffee machine (1) is configured to comprise two chambers (8, 108) adjacent to one another, coffee boiling process with a coffee pot (C) is performed in the boiling chamber (108), and in the adjacent chamber (8) the process of reading-interpreting the coffee grounds (T) marks is performed.

The coffee machine (1) of the present invention, interpreting the coffee grounds (T) marks in the cup (F) and the saucer (P) is a feature that complements the feature of making Turkish coffee with the appropriate taste and consistency thereby satisfying the user demand of the coffee machine (1) for reading fortunes in coffee grounds besides making coffee.

List of preferred embodiments:
1. A coffee machine as defined in Claim 1.
2. A coffee machine (1) defined in the claims, characterized by the coffee grounds fortune teller device (2) comprising a control unit (5) that matches the figures scanned by the camera (3) with the symbols in the memory (4) and prepares a scenario to be presented to the user by incorporating the interpretations relating to the symbols with a software like fuzzy logic such that content integrity is maintained.
3. A coffee machine (1) as in defined in the claims, characterized by the coffee grounds fortune teller device (2) comprising the control unit (5) that analyzes the coffee grounds (T) marks detected by scanning with the camera (3) in two categories as the big figures (main lines) and small figures thereby forming an integrated scenario by combining the interpretations of the big figures and the small figures.
4. A coffee machine (1) as defined in the claims, characterized by the coffee grounds fortune teller device (2) comprising the control unit (5) that compares and interprets the data stored in the memory (4) like the proportion of the dark and light colored areas to each other and the changes from the dark colored areas to light colored areas and the big figures (main lines) detected by the camera (3) with the information in the memory (4).
5. A coffee machine (1) as defined in the claims, characterized by the coffee grounds fortune teller device (2) comprising the control unit (5) that compares the small figures detected by the camera (3) with the symbols stored in the memory (4) and after establishing resemblance with the small figure caught by the camera (3) to the symbol in the memory (4) assigning the small figure the meaning of the symbol it resembles.
6. A coffee machine (1) defined in the claims, characterized by the coffee grounds fortune teller device (2) comprising a movement mechanism (7) that moves the cup (F), the saucer (P) or the camera (3).
7. A coffee machine (1) defined in the claims, characterized by the coffee grounds fortune teller device (2) comprising the camera (3) that scans all around (360 degrees) the inner surface of the cup (F) and the saucer (P).
8. A coffee machine (1) defined in the claims, characterized by the coffee grounds fortune teller device (2) comprising the control unit (5) that uses the positioning data of the figures on the cup (F) and the saucer (P) surfaces, positions of which are determined by polar coordinates.
9. A coffee machine (1) as as defined in the claims, characterized by the coffee grounds fortune teller device (2) comprising the control unit (5) that leaves the figures below a certain size outside the scope of evaluation during the scan of the camera (3).
10. A coffee machine (1) as defined in the claims, characterized by the coffee grounds fortune teller device (2) comprising a telling means (6) for transmitting the scenario prepared by the control unit (5) to the user.
11. A coffee machine (1) as defined in the claims, characterized by a coffee grounds fortune teller device (2) comprising a chamber (8) wherein the cup (F), and/or the saucer (P) are placed for reading - interpreting the coffee grounds (T) marks, a temperature sensor (9) that detects the temperature of the cup (F) and the saucer (P), an alarm (10) that warns the user visually and/or aurally at the start and end of the coffee ground (T) interpretation process, an indicator (11) for placing the cup (F) or the saucer (P) in the proper position in the chamber (8) and a light source (12) for illuminating the inner surface of the cup (F) or the saucer (P).
12. A coffee machine (1) as defined in the claims, characterized by a chamber (108) wherein coffee boiling process can be performed by placing a coffee pot (C) therein.

## Claims

1. A coffee machine (1) for preparing Turkish coffee, **characterized in that** the coffee machine (1) is provided with a coffee grounds fortune teller device (2) adapted to read figures formed by coffee grounds (T) marks settled on a coffee cup (F) or a saucer (P), wherein the coffee grounds fortune teller device (2) comprises
- a camera (3) scanning the inner surface of the cup (F) or the saucer (P) for taking images of the coffee grounds marks (T) on these surfaces, and
- a memory (4) with symbols stored therein, each symbol having a different meaning and a significance level, wherein the coffee grounds fortune teller device (2) is adapted to interpret the figures by comparing them to the symbols stored in the memory, and wherein the coffee grounds fortune teller device (2) is adapted to store the interpretation in the memory and present the interpretation to the user.

2. The coffee machine (1) as in Claim 1, **characterized in that** the coffee grounds fortune teller device (2) comprises a control unit (5) for matching the figures scanned by the camera (3) with the symbols in the memory (4) and for preparing a scenario to be presented to the user by incorporating the interpretations relating to the symbols with a software like fuzzy logic such that content integrity is maintained.

3. The coffee machine (1) as in Claim 2, **characterized in that** the control unit (5) is adapted to distinguish between two categories of figures, namely between big figures and small figures, thereby forming an integrated scenario by combining the interpretations of the big figures and the small figures.

4. The coffee machine (1) as in Claim 3, **characterized in that** the control unit (5) compares and interprets the data stored in the memory (4) like the proportion of the dark and light colored areas to each other and the changes from the dark colored areas to light colored areas and the big figures detected by the camera (3) with the information in the memory (4).

5. The coffee machine (1) as in Claim 3, **characterized in that** the control unit (5) compares the small figures detected by the camera (3) with the symbols stored in the memory (4) and after establishing resemblance with the small figure caught by the camera (3) to the symbol in the memory (4) assigning the small figure the meaning of the symbol it resembles.

6. The coffee machine (1) as in any one of the Claims 1 to 5, **characterized in that** the coffee grounds fortune teller device (2) comprises a movement mechanism (7) that moves the cup (F), the saucer (P) or the camera (3).

7. The coffee machine (1) as in any one of the Claims 1 to 6, **characterized in that** the camera (3) performs a 360 degree scan of the inner surface of the cup (F) and the saucer (P).

8. The coffee machine (1) as in any one of the Claims 2 to 7, **characterized in that** the control unit (5) uses the positioning data of the figures on the cup (F) and the saucer (P) surfaces, positions of which are determined by polar coordinates.

9. The coffee machine (1) as in any one of Claims 2 to 8, **characterized in that** the control unit (5) leaves the figures below a certain size outside the scope of evaluation during the scan of the camera (3).

10. The coffee machine (1) as in any one of claims 2 to 9, **characterized in that** the coffee grounds fortune teller device (2) comprises a telling means (6) for transmitting the scenario prepared by the control unit (5) to the user.

11. The coffee machine (1) as in any one of the above claims, **characterized in that** the coffee grounds fortune teller device (2) comprises a chamber (8) wherein the cup (F), and/or the saucer (P) are placed for reading and interpreting the figures formed by the coffee grounds (T) marks, a temperature sensor (9) that detects the temperature of the cup (F) and the saucer (P), an alarm (10) that warns the user visually and/or aurally at the start and end of the coffee grounds (T) interpretation process, an indicator (11) for placing the cup (F) or the saucer (P) in the proper position in the chamber (8) and a light source (12) for illuminating the inner surface of the cup (F) or the saucer (P).

12. The coffee machine (1) as in Claim 11, **characterized in that** the coffee machine comprises a chamber (108) wherein a coffee boiling process can be performed by placing a coffee pot (C) therein.

## Patentansprüche

1. Kaffeemaschine (1) zum Zubereiten von türkischem Kaffee, **dadurch gekennzeichnet, dass** die Kaffeemaschine (1) mit einer Kaffeesatzwahrsagevorrichtung (2) versehen ist, die dazu angepasst ist, Figuren zu lesen, die von Spuren von Kaffeesatz (T) gebildet werden, der sich in einer Kaffeetasse (F) oder einer Untertasse (P) absetzt, wobei die Kaffeesatzwahrsagevorrichtung (2) Folgendes umfasst
- eine Kamera (3), die die Innenfläche der Tasse (F) oder der Untertasse (P) zum Aufnehmen von Bildern der Kaffeesatzspuren (T) an diesen Flächen abtastet, und
- einen Speicher (4) mit darin gespeicherten Symbolen, wobei jedes Symbol eine andere Bedeutung und einen Bedeutungsgrad aufweist, wobei die Kaffeesatzwahrsagevorrichtung (2) dazu angepasst ist, die Figuren zu interpretieren, indem sie die Symbole, die im Speicher gespeichert sind, vergleicht, und wobei die Kaffeesatzwahrsagevorrichtung (2) dazu angepasst ist, die Interpretation im Speicher zu speichern und die Interpretation dem Benutzer zu präsentieren.

2. Kaffeemaschine (1) nach Anspruch 1, **dadurch gekennzeichnet, dass** die Kaffeesatzwahrsagevorrichtung (2) eine Steuereinheit (5) zum Abgleichen der Figuren, die von der Kamera (3) abgetastet wurden, mit den Symbolen im Speicher (4), und zum Erstellen eines Szenarios, das dem Benutzer präsentiert wird, indem die Interpretation im Zusammenhang mit den Symbolen mit einer Software wie etwa unscharfer Logik integriert wird, derart, dass inhaltliche Stimmigkeit gewahrt bleibt.

3. Kaffeemaschine (1) nach Anspruch 2, **dadurch gekennzeichnet, dass** die Steuereinheit (5) dazu angepasst ist, zwischen zwei Kategorien von Figuren zu unterscheiden, nämlich zwischen großen Figuren und kleinen Figuren, wodurch ein integriertes Szenario gebildet wird, indem die Interpretationen der großen Figuren und der kleinen Figuren kombiniert werden.

4. Kaffeemaschine (1) nach Anspruch 3, **dadurch gekennzeichnet, dass** die Steuereinheit (5) die im Speicher (4) gespeicherten Daten wie etwa die Proportion dunkel und hell gefärbter Bereiche zueinander und Veränderungen von dunkel gefärbten Bereichen zu hell gefärbten Bereichen und die großen von der Kamera (3) erkannten Figuren mit den Informationen im Speicher (4) vergleicht und interpretiert.

5. Kaffeemaschine (1) nach Anspruch 3, **dadurch gekennzeichnet, dass** die Steuereinheit (5) die kleinen von der Kamera (3) erkannten Figuren mit den Symbolen vergleicht, die im Speicher (4) gespeichert sind, und bei Feststellung einer Ähnlichkeit mit der kleinen von der Kamera (3) erfassten Figur mit dem Symbol im Speicher (4) der kleinen Figur die Bedeutung des Symbols zuweist, dem es ähnelt.

6. Kaffeemaschine (1) nach einem der Ansprüche 1 bis 5, **dadurch gekennzeichnet, dass** die Kaffeesatzwahrsagevorrichtung (2) einen Bewegungsmechanismus (7) umfasst, der die Tasse (F), die Untertasse (P) oder die Kamera (3) bewegt.

7. Kaffeemaschine (1) nach einem der Ansprüche 1 bis 6, **dadurch gekennzeichnet, dass** die Kamera (3) eine 360-Grad-Abtastung der Innenfläche der Tasse (F) und der Untertasse (P) durchführt.

8. Kaffeemaschine (1) nach einem der Ansprüche 2 bis 7, **dadurch gekennzeichnet, dass** die Steuereinheit (5) die Positionierungsdaten der Figuren an den Flächen der Tasse (F) und der Untertasse (P) verwendet, deren Positionen durch Polarkoordinaten bestimmt werden.

9. Kaffeemaschine (1) nach einem der Ansprüche 2 bis 8, **dadurch gekennzeichnet, dass** die Steuereinheit (5) die Figuren unterhalb einer bestimmten Größe während der Abtastung der Kamera (3) aus dem Beurteilungsumfang ausschließt.

10. Kaffeemaschine (1) nach einem der Ansprüche 2 bis 9, **dadurch gekennzeichnet, dass** die Kaffeesatzwahrsagevorrichtung (2) ein Mitteilungsmittel (6) zum Übertragen des von der Steuereinheit (5) erstellten Szenarios an den Benutzer umfasst.

11. Kaffeemaschine (1) nach einem der vorangehenden Ansprüche, **dadurch gekennzeichnet, dass** die Kaffeesatzwahrsagevorrichtung (2) eine Kammer (8), in der die Tasse (F) und/oder die Untertasse (P) zum Auslesen und Interpretieren der Figuren, die von den Spuren von Kaffeesatz (T) gebildet werden, angeordnet wird, einen Temperatursensor (9), der die Temperatur der Tasse (F) und der Untertasse (P) erkennt, einen Alarm (10), der den Benutzer optisch und/oder akustisch am Beginn und am Ende des Interpretationsprozesses des Kaffeesatzes (T) warnt, eine Anzeige (11) zum Anordnen der Tasse (F) oder der Untertasse (P) in der richtigen Position in der Kammer (8) und eine Lichtquelle (12) zum Beleuchten der Innenfläche der Tasse (F) oder der Untertasse (P) umfasst.

12. Kaffeemaschine (1) nach Anspruch 11, **dadurch gekennzeichnet, dass** die Kaffeemaschine eine Kammer (108) umfasst, in der ein Kaffeebrühprozess durchgeführt werden kann, indem eine Kaffeekanne (C) darin angeordnet wird.

## Revendications

1. Une machine à café (1) qui est utilisé pour préparer le café turc, **caractérisée en ce que** la machine à café (1) comprend un dispositif diseur de bonne aventure par le marc de café (2) qui est adapté à lire des figures formées par le marc de café (T) se déposant sur une tasse de café (F) ou une soucoupe de café (P), où le dispositif diseur de bonne aventure par le marc de café (2) comprend
- une caméra (3) qui effectue un balayage de la surface intérieure de la tasse (F) ou de la soucoupe (P) pour des images parlants du marc de café (T) sur ces surfaces, et
- une mémoire (4) qui contient des symboles, chaque symbole présentant un sens différent et un niveau de signification, où le dispositif diseur de bonne aventure par le marc de café (2) est adapté à interpréter les figures en les comparant avec les symboles enregistrées dans la mémoire, et où le dispositif diseur de bonne aventure par le marc de café (2) est adapté à stocker l'interprétation dans la mémoire et présenter l'interprétation à l'utilisateur.

2. Une machine à café (1) selon la Revendication 1, **caractérisée en ce que** le dispositif diseur de bonne aventure par le marc de café (2) comprend une unité de commande (5) pour associer les figures numérisées par la caméra (3) aux symboles dans la mémoire (4) et pour préparer un scénario à présenter à l'utilisateur en incorporant l'interprétation relative aux symboles avec un logiciel comme logique floue de telle sorte que l'intégrité du contenu est maintenue.

3. Une machine à café (1) selon la Revendication 2, **caractérisée en ce que** l'unité de commande (5) est adaptée à distinguer les deux catégories de figures l'une de l'autre, à savoir entre les figures grandes et les figures petites, donc formant un scénario intégré en combinant les interprétations des figures grandes et figures petites.

4. Une machine à café (1) selon la Revendication 3, **caractérisée en ce que** l'unité de commande (5) compare et interprète les données enregistrées dans la mémoire (4) comme la proportion des zones de couleur foncée et claire l'une à l'autre et les changements entre les zones de couleur foncée et les zones de couleur claire et les figures grandes détectées par la caméra (3) avec les informations dans la mémoire (4).

5. Une machine à café (1) selon la Revendication 3, **caractérisée en ce que** l'unité de commande (5) compare les figures petites détectées par la caméra (3) avec les symboles enregistrées dans la mémoire (4) et après avoir établi la ressemblance entre la figure petite saisie par la caméra (3) et la symbole dans la mémoire (4), donc assignant à la figure petite le sens de la symbole à laquelle elle ressemble.

6. Une machine à café (1) selon l'une quelconque des revendications de 1 à 5, **caractérisée en ce que** le dispositif diseur de bonne aventure par le marc de café (2) comprend un mécanisme de mouvement (7) qui déplace la tasse (F), la soucoupe (P) ou la caméra (3).

7. Une machine à café (1) selon l'une quelconque des revendications de 1 à 6, **caractérisée en ce que** la caméra (3) effectue un balayage de 360 degrés de la surface intérieure de la tasse (F) et la soucoupe (P).

8. Une machine à café (1) selon l'une quelconque des revendications de 2 à 7, **caractérisée en ce que** l'unité de commande (5) utilise les données de positionnement des figures sur les surfaces de la tasse (F) et de la soucoupe (P) dont les positions sont déterminées par des coordonnées polaires.

9. Une machine à café (1) selon l'une quelconque des revendications de 2 à 8, **caractérisée en ce que** l'unité de commande (5) laisse les figures avec une taille au-dessous d'une certaine valeur hors du cadre de l'évaluation pendant le balayage de la caméra (3).

10. Une machine à café (1) selon l'une quelconque des revendications de 2 à 9, **caractérisée en ce que** le dispositif diseur de bonne aventure par le marc de café (2) comprend un dispositif diseur (6) pour transmettre le scénario préparé par l'unité de commande (5) à l'utilisateur.

11. Une machine à café (1) selon l'une quelconque des revendications précédentes, **caractérisée en ce que** le dispositif diseur de bonne aventure par le marc de café (2) comprend une chambre (8) dans laquelle la tasse (F) et/ou la soucoupe (P) sont placés pour lire et interpréter les figures formées par le marc de café (T), un capteur de température (9) qui détecte la température de la tasse (F) et de la soucoupe (P), une alarme (10) qui avertit l'utilisateur visuellement et/ou auditivement au début et à la fin du processus d'interprétation du marc de café (T), un indicateur (11) pour placer la tasse (F) ou la soucoupe (P) dans la position correcte dans la chambre (8) et une source de lumière (12) pour illuminer la surface intérieure de la tasse (F) ou la soucoupe (P).

12. Une machine à café (1) selon la Revendication 11, **caractérisée en ce que** la machine à café comprend une chambre (108) dans laquelle le processus d'ébullition du café peut être effectué en y plaçant le pot de café (C).
